Europäisches Patentamt

European Patent Office

Office européen des brevets

(19)

(11) Veröffentlichungsnummer : **0 123 869**
**B1**

(12) **EUROPÄISCHE PATENTSCHRIFT**

(45) Veröffentlichungstag der Patentschrift :
27.05.87

(21) Anmeldenummer : 84103076.0

(22) Anmeldetag : 21.03.84

(51) Int. Cl.⁴ : **F 24 H  1/28**, F 24 H  1/43,
**F 24 H  1/44**

(54) Brennwertkessel, insbesondere zur Erzeugung von Heiss- oder Heizwasser mit einem Gasbrenner.

(30) Priorität : 02.04.83 DE 8309781 U

(43) Veröffentlichungstag der Anmeldung :
07.11.84 Patentblatt 84/45

(45) Bekanntmachung des Hinweises auf die Patenterteilung : 27.05.87 Patentblatt 87/22

(84) Benannte Vertragsstaaten :
AT BE CH DE FR GB IT LI LU NL SE

(56) Entgegenhaltungen :
EP-A- 0 064 755
CH-A-  232 071
DE-A- 2 950 901
FR-A- 2 240 424
FR-A- 2 442 408
US-A- 2 214 676

(73) Patentinhaber : **Seeger, Heinz-Dieter**
**Bremmenstrasse 18**
**D-4600 Dortmund 13 (DE)**

(72) Erfinder : **Seeger, Heinz-Dieter**
**Bremmenstrasse 18**
**D-4600 Dortmund 13 (DE)**

(74) Vertreter : **Patentanwälte Meinke und Dabringhaus**
**Dipl.-Ing. J. Meinke Dipl.-Ing. W. Dabringhaus**
**Westenhellweg 67**
**D-4600 Dortmund 1 (DE)**

**Beschreibung**

Die Erfindung richtet sich auf einen Brennwertkessel, insbesondere zur Erzeugung von Heiß- oder Heizwasser mit einem Gasbrenner, einem dem Brenner zugeordneten Brennraum und einem mit Wärmetauscherrohren versehenen Gasraum und einem Abgasstutzen, wobei die Rauchgase aus dem Brennraum von oben durch den Gasraum nach unten zum Abgasstutzen geführt sind.

Brenner dieser Art sind z. B. aus der NL-A-7 904 813 oder der FR-A-1 060 488 bekannt. Bei den bekannten Heizkesseln handelt es sich in der Regel nicht um sogenannte Brennwertkessel, d. h. nicht um Kessel, bei denen das Gas beim Eintritt in den Abgasstutzen die Taupunkttemperatur bereits unterschritten hat, so daß es im Brenner bereits zur Kondensation kommt. Derartige Brenner sind z. B. durch die EP-A-0 064 755 des Anmelders bekannt.

Beim Stand der Technik ist insbesondere die vergleichsweise aufwendige Bauweise von Nachteil. Auch ist in der Regel ein Naturzug in diesen Brennern nicht gegeben, insbesondere dann nicht, wenn es sich um Brennwertkessel handelt. Die bekannten Kessel sind räumlich immer noch vergleichsweise groß. Auch ist der Ausnutzungsgrad noch nicht bei allen derartigen Kesseln befriedigend.

Aufgabe der Erfindung ist die Schaffung einer Lösung, mit der zum einen mit konstruktiv einfachen Mitteln eine sehr kompakte Bauweise ebenso gewährleistet ist, wie die Aufrechterhaltung eines Naturzuges der Rauchgase, ein hoher Ausnutzungsgrad und optimale Verbrennungsluftzufuhr zum Brenner.

Bei einem Brennwertkessel der eingangs bezeichneten Art wird diese Aufgabe gemäß der Erfindung dadurch gelöst, daß der Brennraum ringförmig und der Gasraum als den Brennraum ringförmig umgebender Ringraum ausgebildet ist.

Die konzentrische Anordnung des Brennraumes zum Gasraum macht eine sehr kompakte Bauweise möglich, da mit einer derartigen Bauweise optimale Flächenverhältnisse der einzelnen zur Verfügung stehenden Flächen erreichbar sind. Z. B. eine Optimierung der Querschnittsflächen zwischen Brennraum und Gasraum ebenso, wie die Optimierung der Wärmetauscherflächen.

Aus der FR-A-2 240 424 ist ein Kessel bereits bekannt mit einem zentrischen Brennraum, der von wasserführenden Wänden umgeben ist und gegenüber dem sonstigen Wasserraum eine dazu konzentrische Rauchgasrückführung ermöglicht. Bei dieser bekannten Lösung stehen nur glatte wassergekühlte Wände zum Wärmetausch bereit. Die Konstruktion ist sehr aufwendig und vergleichsweise kostspielig. Wegen der geringen Wärmetauscherflächen ist der Ausnutzungsgrad nur gering.

Aus der FR-A-2 442 408 ist ein Gerät bekannt, welches sowohl Heiz- als auch Brauchwasser zu erwärmen in der Lage ist. Auch hier wird zentrisch das Rauchgas nach außen geführt und über Rohrwendeln gekühlt. Der zentrische Rauchgasabzug ist dabei von einem weiteren kreisringförmig umgebenden Schacht unter Zwischenschaltung einer wasserführenden Rohrwendel umgeben. Dieser Schacht ist wiederum außen von einer wasserführenden weiteren Rohrwendel umschlossen. Diese bekannte Konstruktion ist ausgesprochen aufwendig in ihrer Bauweise ; die Herstellung ist schwierig. Eine Rauchgasumlenkung und damit die Möglichkeit, das Gerät als sogenanntes Brennwertgerät zu betreiben, ist hier nicht vorgesehen.

In Ausgestaltung sieht die Erfindung vor, daß die Wände des Brenn- und Gasraumes mit dem zu erwärmenden Medium durchstömbar ausgebildet sind, wobei insbesondere vorgesehen sein kann, daß die Wände des Brenn- und Gasraumes aus. kammerbildenden, glattflächigen Edelstahlflächen gebildet sind, wobei die so gebildeten Kammern mit dem zu erwärmenden Medium füllbar sind.

Die erfindungsgemäße Gestaltung der mit Brenn- und Rauchgas beaufschlagten Wände und deren gleichzeitiger Kühlung durch das zu erwärmende Medium, z. B. durch Wasser, ermöglicht optimale Ausnutzung (einfache Bauweise) und damit trotz der Materialkosten, wirtschaftliche Herstellung eines Kessels.

Zweckmäßig kann es sein, wenn im Gasraum eine Mehrzahl von parallel liegenden, mit dem zu erwärmenden Medium durchströmte Rohrschlangen angeordnet ist, wie dies die Erfindung ebenfalls vorsieht.

Zur Aufrechterhaltung eines Naturzuges ist erfindungsgemäß vorgesehen, daß die Querschnitte der für das Brenngas zur Verfügung stehenden Durchströmflächen im Brennraum, Gasraum und im Abgasstutzen zunehmend sich verringernd ausgebildet sind.

In der Praxis hat es sich gezeigt, daß trotz niedriger Temperaturen am Abgasstutzen ein Naturzug gewährleistet ist, d. h., derartige Kessel eignen sich insbesondere als Außenwandkessel, d. h. die Abgase werden durch die Wand am Standort ins Freie abgegeben, eines Kamines bedarf es in einem solchen Fall nicht.

Zur Entsorgung des Kessels ist vorgesehen, daß am unteren Ende des Gasraumes ein Kondensatsammler angeordnet ist. Das Kondensat kann einer weiteren Behandlung zugeführt werden, worauf es hier nicht mehr ankommt.

Durch die kreisringförmige Gestaltung des Brennraumes stehen auf kleinem Raum bereits vergleichsweise große Wärmetauscherflächen zur Verfügung. Allerdings bilden Rohrschlangen ebenfalls sehr große Oberflächen. Eine aber nicht ausschließliche Gestaltung nach der Erfindung ist dabei so getroffen, daß die zum Wärmetausch zur Verfügung stehende Wärmetauscherfläche im Brennraum ca. 15 % und im Gasraum ca. 85 % der Gesamtwärmetauscherfläche beträgt.

Die großen Zylinderflächen im Brennraum machen es möglich, das Rauchgas bereits so weit abzukühlen, daß am Ende des Brennraumes bereits Kondensation der Rauchgase eintritt, wie dies die Erfindung in Ausgestaltung ebenfalls vorsieht.

Zweckmäßig kann es sein, wenn der Brenner als Zangenbrenner mit im wesentlichen kreisförmigem Querschnitt mit Einzeldüsen ausgebildet ist.

Weitere Merkmale, Einzelheiten und Vorteile der Erfindung ergeben sich aufgrund der nachfolgenden Beschreibung sowie anhand der Zeichnung. Diese zeigt in

Figur 1 einen Querschnitt durch einen Brennwertkessel nach der Erfindung sowie in

Figur 2 eine Aufsicht gemäß Linie II-II in Fig. 1.

Der allgemein mit 1 bezeichnete Brennwertkessel soll im dargestellten Beispiel zur Erzeugung von Heiz- oder Heißwasser dienen. Auf dieses Einsatzgebiet ist er allerdings nicht beschränkt. Er kann in gleicher Weise zur Erhitzung von Ölen, Prozeßwässern oder anderen flüssigen Medien eingesetzt werden. Gleichwohl ist im Nachfolgenden nur von Wasser die Rede.

Der Brennwertkessel 1 besteht aus konzentrisch angeordneten Kammern, einer Zentralkammer 2, einem Brennraum 3 und einem Gasraum 4, die jeweils konzentrisch zueinander angeordnet und von wasserführenden Wänden umgeben sind. Alle wasserführenden Teile sind in den Figuren schraffiert dargestellt. Die wasserführenden Ringwände sind wie folgt bezeichnet : Die innere Ringwand trägt das Bezugszeichen 5, die äußere Ringwand des Brennraumes, die gleichzeitig die innere Ringwand des Gasraumes darstellt, das Bezugszeichen 6 und die äußere Ringwand des Gasraumes 4 das Bezugszeichen 7. Alle Wände 5-7 sind aus glatten Edelstahlblechen als Kammern ausgebildet. Überbrückt sind die so gebildeten wasserführenden Kammern mit Vorlaufleitungen 8 an ihrer in Schwerkraftrichtung gesehen oberen Seite. Sie weisen eine Sammelkammer 9 in ihrem unteren Bereich auf. Vom Vorlaufverteiler 8 gehen auch die Zuläufe 10 zu Rohrschlangen 11 aus, die den Gasraum 4 durchsetzen, wobei die Art des Durchsatzes in der Figur lediglich ein Beispiel darstellt. Die Rohrschlangen 11 münden wieder im Rücklaufsammler 9.

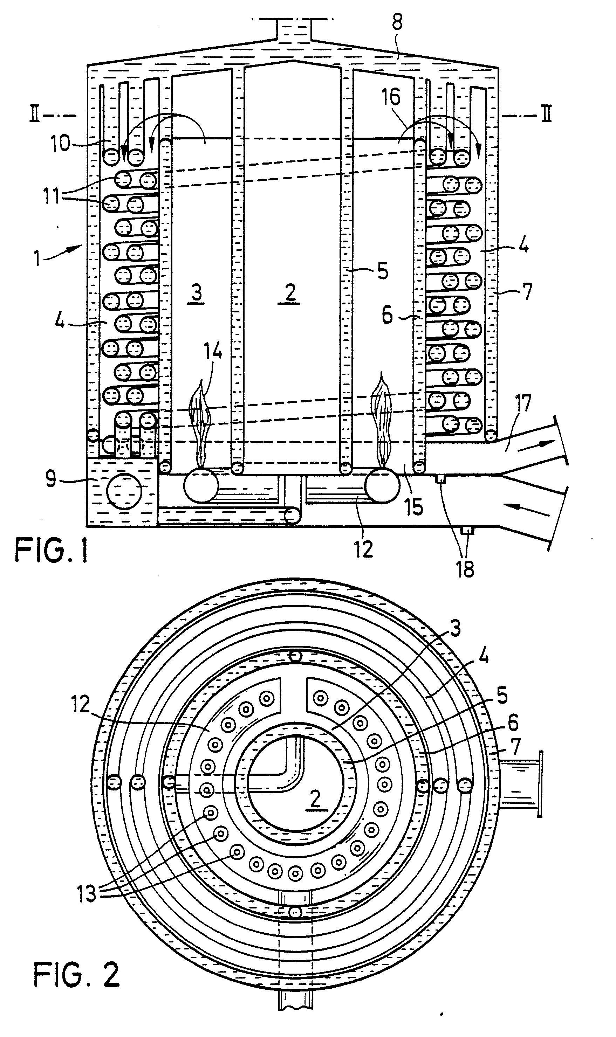

Der Gasbrenner selbst ist als Zangenbrenner 12 mit einer Vielzahl von Einzeldüsen 13 ausgebildet, die Flammen sind in der Fig. 1 lediglich symbolisch dargestellt und mit 14 bezeichnet.

Die Zugluft tritt bei 15 unten in den Brennraum 3 ein. Aus dem Brennraum 3 treten die Rauchgase in den Gasraum 4 von oben ein, was vereinfacht durch die Pfeile 16 angedeutet ist. Nach Verlassen des Gasraumes werden die Rauchgase gesammelt und werden vom Abgasstutzen 17 aus weitergeleitet, worauf es hier nicht näher ankommt. Sie können z. B. durch eine Gebäudewand ins Freie geleitet werden.

Da der Brennwertkessel 1 so ausgelegt ist, daß sich ggf. bereits im Brennraum 3 Kondensat sammelt, ist ein Kondensatsammler vorgesehen. Die jeweiligen Austrittsöffnungen sind nur symbolisch dargestellt und tragen das Bezugszeichen 18. Von hier aus kann das Kondensat einer weiteren Behandlung zugeführt werden, was nicht näher dargestellt ist.

Die für das Rauchgas zur Verfügung stehenden Durchtrittsflächen werden immer kleiner bis zum Abgasstutzen 17, wodurch die Zugwirkung erhöht wird. In der Praxis kann der dargestellte Brennwertkessel im Naturzug betrieben werden, d. h. ein Abgasgebläse ist entbehrlich. Natürlich kann ein solches je nach Einsatzgebiet auch vorgesehen sein, worauf es hier aber nicht ankommt.

**Patentansprüche**

1. Brennwertkessel, insbesondere zur Erzeugung von Heiß- oder Heizwasser, mit einem Gasbrenner, einem dem Brenner zugeordneten Brennraum und einem mit Wärmetauscherrohren versehenen Gasraum und einem Abgasstutzen, wobei die Rauchgase aus dem Brennraum von oben durch den Gasraum nach unten zum Abgasstutzen geführt sind, dadurch gekennzeichnet, daß der Brennraum (3) ringförmig und der Gasraum (4) als den Brennraum ringförmig umgebender Raum ausgebildet ist.

2. Brennwertkessel nach Anspruch 1, dadurch gekennzeichnet, daß die Wände (5, 6, 7) des Brenn- und Gasraumes (3 und 4) mit dem zu erwärmenden Medium durchströmt ausgebildet sind.

3. Brennwertkessel nach Anspruch 2, dadurch gekennzeichnet, daß die Wände (5, 6, 7) des Brenn- und Gasraumes (3 und 4) aus kammerbildenden, glattflächigen Edelstahlflächen gebildet sind, wobei die so gebildeten Kammern (5, 6, 7) mit dem zu erwärmenden Medium füllbar sind.

4. Brennwertkessel nach einem der vorangehenden Ansprüche, dadurch gekennzeichnet, daß im Gasraum (4) eine Mehrzahl von parallel liegenden, mit dem zu erwärmenden Medium durchströmte Rohrschlangen (11) angeordnet ist.

5. Brennwertkessel nach Anspruch 1 oder einem der folgenden, dadurch gekennzeichnet, daß die Querschnitte der für das Brenngas zur Verfügung stehenden Durchströmflächen im Brennraum (3), Gasraum (4) und im Abgasstutzen (17) zunehmend sich verringernd ausgebildet sind.

6. Brennwertkessel nach einem der vorangehenden Ansprüche, dadurch gekennzeichnet, daß am unteren Ende des Gasraumes ein Kondensatsammler (18) angeordnet ist.

7. Brennwertkessel nach einem der vorangehenden Ansprüche, dadurch gekennzeichnet, daß die zum Wärmetausch zur Verfügung stehende Wärmetauscherfläche im Brennraum ca. 15 % und im Gasraum ca. 85 % der Gesamtwärmetauscherfläche beträgt.

8. Brennwertkessel nach einem der vorangehenden Ansprüche, dadurch gekennzeichnet, daß die Wärmetauscherfläche relativ zur Brennerleistung so bemessen ist, daß bereits am Ende des Brennraumes (3) Kondensation eintritt.

9. Brennwertkessel nach einem der vorangehenden Ansprüche, dadurch gekennzeichnet, daß der Brenner als Zangenbrenner (12) mit im wesentlichen kreisförmigem Querschnitt mit Einzeldüsen (13) ausgebildet ist.

## Claims

1. A calorific-value boiler, in particular for producing hot or heating water, comprising a gas burner, a combustion chamber associated with the burner, a gas chamber provided with heat exchanger pipes and a waste gas connection, wherein the flue gases are guided from the combustion chamber from the top through the gas chamber downwardly to the waste gas connection, characterised in that the combustion chamber (3) is annular and the gas chamber (4) is in the form of a chamber which surrounds the combustion chamber in an annular configuration.

2. A boiler according to claim 1 characterised in that the walls (5, 6, 7) of the combustion and gas chambers (3 and 4) are adapted to have the medium to be heated flowing therethrough.

3. A boiler according to claim 2 characterised in that the walls (5, 6, 7) of the combustion and gas chambers (3 and 4) are formed from chamber-forming, smooth-surfaced high-grade steel surfaces, wherein the chambers (5, 6, 7) formed in that way can be filled with the medium to be heated.

4. A boiler according to one of the preceding claims characterised in that disposed in the gas chamber (4) is a plurality of parallel pipe coils (11) through which flows the medium to be heated.

5. A boiler according to claim 1 or one of the following claims characterised in that the cross-sections of the through-flow areas available for the combustion gas in the combustion chamber (3), the gas chamber (4) and in the waste gas connection (17) are of an increasingly reducing configuration.

6. A boiler according to one of the preceding claims characterised in that a condensate trap (18) is arranged at the lower end of the gas chamber.

7. A boiler according to one of the preceding claims characterised in that the heat exchanger area available for heat exchange purposes in the combustion chamber is about 15 % of the total heat exchanger area and in the gas chamber it is about 85 % of the total heat exchanger area.

8. A boiler according to one of the preceding claims characterised in that the heat exchanger area is of such a size relative to the burner output that condensation already occurs at the end of the combustion chamber (3).

9. A boiler according to one of the preceding claims characterised in that the burner is in the form of a forcipate burner (12) of substantially circular cross-section with individual nozzles (13).

## Revendications

1. Chaudière à puissance calorifique, notamment pour la génération d'eau chaude et d'eau de chauffage, comprenant un brûleur à gaz, une chambre de combustion associée à ce brûleur, une chambre à gaz pourvue de tubes d'échange thermique et un manchon parcouru par les gaz d'échappement, les gaz de fumée sortant de la chambre de combustion étant dirigés de haut en bas à travers la chambre à gaz, jusqu'au manchon à gaz d'échappement, caractérisé par le fait que la chambre de combustion (3) est de réalisation annulaire, la chambre à gaz (4) étant réalisée sous la forme d'une chambre qui entoure annulairement cette chambre de combustion.

2. Chaudière à puissance calorifique selon la revendication 1, caractérisée par le fait que les parois (5, 6, 7) de la chambre de combustion et de la chambre à gaz (3 et 4) sont réalisées de manière à pouvoir être parcourues par le fluide devant être chauffé.

3. Chaudière à puissance calorifique selon la revendication 2, caractérisée par le fait que les parois (5, 6, 7) de la chambre de combustion et de la chambre à gaz (3 et 4) sont constituées par des surfaces lisses en acier fin formant des compartiments, les compartiments (5, 6, 7) ainsi formés pouvant être emplis par le fluide devant être chauffé.

4. Chaudière à puissance calorifique selon l'une des revendications précédentes, caractérisée par le fait que la chambre à gaz (4) renferme plusieurs serpentins tubulaires (11) disposés parallèlement et parcourus par le fluide devant être chauffé.

5. Chaudière à puissance calorifique selon la revendication 1 ou l'une des suivantes, caractérisée par le fait que les sections des surfaces d'écoulement traversant, disponibles pour les gaz de combustion et situées dans la chambre de combustion (3), la chambre à gaz (4) et le manchon (17) à gaz d'échappement, sont réalisées avec décroissance progressive.

6. Chaudière à puissance calorifique selon l'une des revendications précédentes, caractérisée par le fait qu'un collecteur de condensat (18) est installé à l'extrémité inférieure de la chambre à gaz.

7. Chaudière à puissance calorifique selon l'une des revendications précédentes, caractérisée par le fait que la surface des échangeurs de chaleur disponibles pour l'échange thermique représente, par rapport à toute la surface d'échange thermique, environ 15 % dans la chambre de combustion et environ 85 % dans la chambre à gaz.

8. Chaudière à puissance calorifique selon l'une des revendications précédentes, caractérisée par le fait que la surface des échangeurs de chaleur est dimensionnée, par rapport à la puissance du brûleur, de telle sorte qu'une condensation se produise déjà à l'extrémité de la chambre de combustion (3).

9. Chaudière à puissance calorifique selon l'une des revendications précédentes, caractérisée par le fait que le brûleur est réalisé en tant que brûleur en tenaille (12), présentant une section sensiblement circulaire et percé d'ajutages individuels (13).

FIG.1

FIG. 2